# EUROPEAN PATENT APPLICATION

(11) **EP 4 290 062 A1**
(43) Date of publication of application: **13.12.2023**
(21) Application number: 22749292.3
(22) Date of filing: 08.02.2022
(51) Int. Cl.: F02B 47/10, F02M 25/10, F02M 26/15, B60K 15/00, B60K 15/063, B60K 15/073

(54) **OXYGEN AND FUEL SUPPLY SYSTEM FOR INTERNAL COMBUSTION ENGINES**

(30) Priority: 08.02.2021 ES 202100050 U; 16.02.2021 ES 202100060 U
(71) Applicant: Muñoz Saiz, Manuel, 04004 Almeria (ES)
(72) Inventor: Muñoz Saiz, Manuel, 04004 Almeria (ES)
(86) International application number: PCT/ES2022/000004
(87) International publication number: WO 2022/167707

(57) **Abstract**

Oxygen feeder system for internal combustion engines, which includes oxygen supplies for the engines, particle filters, oxygen generators using nanofilters, pressurized oxygen bottles and air compressors, O2 loading media, or O2 mixed with Ar, by means of bottles, carboys or interchangeable tanks or hoses, Complementary means of nanomolecular membrane filters that separate O2 from air, performing the separation by means of aspiration or suction from the combustion engine or the suction or impulsion of a pump or compressor driven by an electric motor or mechanically by the combustion engine itself; Storage means for the separated or obtained O2; means for controlling the variable fuel/O2 mixture by means of a processor or an ECU (engine control unit); and as fuel: synthetic fuel, hydrocarbons, alcohols or hydrogen.

## Description

FIELD OF THE INVENTION. In oxidizer and fuel feeding systems in internal combustion engines in general.

STATE OF THE ART. Current engines use fossil fuels and atmospheric air as oxidizer, which carries approximately eighty percent of gases, which hinder combustion and produce polluting, toxic and carcinogenic products.

### Objective of the invention

To use a simple system (especially if only bottles or O2 refills are used), economical and very useful, applying O2, gas or liquid as oxidizer and as fuels in addition to hydrocarbons, alcohols and green hydrogen, by means of bottles or tanks, or by injecting or recharging them with hoses. Avoiding toxic and polluting gases. The CO2 produced is stored and extracted in bottles or tanks, or is sucked up and extracted with hoses. O2 is used alone or mixed with a noble gas, but due to its abundance and ease of obtaining, only argon is used.

Provisionally, in current engines the O2 can be applied in a variable way, reducing the air and consequently the N2 that intervenes in the combustion.

Improve combustion in high places or places with a lot of environmental pollution. Reducing or eliminating polluting gases, favoring the health of the population and avoiding global warming. In Mexico, about 17,000 people die a year from this cause, not counting other diseases due to pollution.

Use a filtering system, which, in some cases, due to the few layers used by the membranes and their large surface, it is not necessary to apply pressure, and the suction made by the motor may be sufficient. Using large-surface membranes in the form of flat, tubular sheets or of the type called hollow fiber, also tubular in structure, multi-layered with pores or cylindrical perforations, multiple nanotubes laterally attached to each other, graphene filters or other simple-to-use nanomolecular elements. or multiple layers with or without calibrated perforations. Which provide easy penetration and separation of the molecules, some of them without having to use great pressure. Hollow polymer fibers are packaged together in a functional unit, called a membrane module, which consists of a bundle of several thousand hollow fibers inside a shell made of carbon/stainless steel, aluminum, or FRP (Fiber Reinforcement Composites with polymers). Each end of the fiber bundle is embedded in a resin body that covers the internal cross-sectional area of the housing, so that supply air is forced into the openings or side of the fibers at the module inlet and the Oxygen-enriched permeate produced will be released at a pressure close to ambient pressure through a radial outlet located in the casing, between the two bodies of resin is collected at the outlet of the module. Nitrogen is released or can be collected and stored. Typically, membrane modules are installed in a parallel configuration so that the output of each module contributes proportionally to the system capacity. The kinetic diameter of oxygen is 3.46 Å and that of nitrogen is 3.64 Å. Therefore a filter with 3.5 Å pores are suitable for filtering.

Use renewable energy to obtain, compress and store O2 in a deposit, tank or bottles for its use with or without mixing it with argon.

Advantages. It allows to improve the oxygen supply, considerably increasing the power and producing great savings. It is economical, very useful, easy to apply, allows you to take advantage of renewable energy and is very ecological.

It allows the use of smaller or less displacement engines and in current ones reduce fuel. Therefore much less CO2 is produced.

Eliminates or reduces some of the exhaust gases from engines, of which the most harmful or toxic are CO (carbon monoxide), CO2 (carbon dioxide), nitrogen oxides (NO2), aldehydes, sulfur dioxide, soot and unburned hydrocarbons, the latter in addition to being toxic are carcinogenic and are produced mainly by poor combustion or lack of oxygen and excess nitrogen.

It uses, among others, graphene filters or other similar nanomolecular elements, preferably single or double layer with or without perforations, pores, slits or calibrated slits that provide easy penetration and separation of some gases without having to use high pressure.

With the achievement of graphene, a stable porous nanomembrane thinner than a nanometer, that is, 100,000 times thinner than a human hair, simple filtrations are achieved, without the need to use high pressure.

Made of two layers of graphene, the two-dimensional film of carbon atoms, is etched with tiny perforations, pores, slits, etc. of a precisely defined size, being permeable to small molecules. It allows to separate gaseous mixtures into their constituent parts. With a thickness of only two carbon atoms, light and flexible, it is the thinnest porous membrane that is possible to make technologically. With this type of atomic thickness membranes a maximum permeation can be reached. Allowing for the fastest possible rate of permeation.

The thinner the membrane, the lower its resistance to permeation.

The double layer graphene film or membrane has a high degree of purity.

The small amounts of some gases in the air are not important, therefore a single nanomolecular filtration is sufficient (pure oxygen is not needed, which is more difficult and expensive to obtain). The structure allows the passage of oxygen and other gases in small quantities, smaller diameter molecules including water vapor and prevents the passage of nitrogen and gases or elements whose kinetic diameter is greater.

With current technology, UV light with a wavelength of 185 nm and 254 nm is used, which achieves pores with a diameter of less than a nanometer and the pore diameter can be graduated, depending on the gas that we wish to separate. The pore diameter will be somewhat smaller than the molecule of the mixed gas we wish to reject. Ultraviolet light produces an oxidative perforation, to create the molecular sieve. It is essential to create the molecular sieve in two dimensions. Hollow fiber membranes and clusters of nanotubes can also be used, the pore size should be 3.5 Å.

Allows variable use of O2 and fuel in current engines, until proper engine dimensions and proportions are achieved.

An oxygen-hydrocarbon, oxygen-alcohol or oxygen-hydrogen combustion is achieved, the latter without polluting waste or CO2, very useful in large cities. (oxygen and hydrogen can be mixed with argon). CO2 is compressed and stored in tanks or bottles that are exchanged or drawn from.

### PROVIDES GREAT ENVIRONMENTAL BENEFIT AND PREVENTS CLIMATE

CHANGE. Using only this system it is possible to avoid climate change, something that is not achieved using all the other existing systems.

ALLOWS THE RECOVERY OF THE EXPLOSION ENGINE AND HYDROCARBONS ONCE TRANSFORMED, BECAUSE THEY HAVE FEWER INCONVENIENCES THAN ELECTRIC BATTERIES AND BE THE MOST ECONOMIC VEHICLES.

The high pressure of oxygen facilitates the work of the engine. By not having to compress.

The use of this system should be mandatory.

### Problem to solve.

In internal combustion engines, imperfect and polluting combustion occurs due to the poor proportion in which oxidizers are involved, as a consequence of the undesirable elements that accompany oxygen when air is used. Very damaging especially in cities

The oxygen and fuel supply system for internal combustion engines replaces air with O2, and simultaneously reduces fuel, which especially in vehicles includes:
- A means of loading O2, or O2 mixed with Ar, using bottles, carboys or interchangeable tanks;
- Some means of recharging the O2, or O2 mixed with Ar, by means of hoses; - Filter media by means of particle pre-filters;
- Complementary means of nanomolecular membrane filters that separate O2 from the air, performing the separation by means of the aspiration or suction of the combustion engine or the suction or impulsion of a pump or compressor driven by an electric motor or mechanically by the combustion engine itself. ;
- Storage means for the O2 separated or obtained;
- Means for controlling the variable fuel/O2 mixture by means of a processor or the ECU (engine control unit);
- Means for controlling the variable air/O2 mixture by means of a processor or the ECU (engine control unit);
- Means for compression and storage of CO2 from exhaust gases;
- Means for discharging the CO2;
- Means for refeeding the CO2 mixed with the engine fuel, once it has been treated and converted into fuel;
- Some means of variable control of the fuel: synthetic fuel, hydrocarbon, alcohol or hydrogen and
- Some vehicles located in strategic places on land routes, loaded with oxygen, hydrogen and optionally biological or synthetic fuels, in bottles or canisters and some suppliers or dispensers of said elements in the form of pressurized or liquefied gas by means of hoses, adding installations in the vehicles for the application of fluids in the engines. The simultaneous use of O2 bottles and that obtained by filtering the air is very useful.

In all cases, O2 can be mixed and attenuated with a noble gas, generally argon, which is the cheapest and easiest to obtain.

Regulating valves control the fuel / O2 ratio and/or the air 102 mixture, fixed or variable, manually or through the ECU. The O2 / N2 ratio can be controlled, or the amount of N2 can be totally eliminated. This last case requires the use of new engines, or special engines, since the combustion is excessively powerful. In current engines you can also regulate or reduce the flow of fuel to avoid damaging the engine. New engines must be tuned or adapted for a fixed oxygen fuel ratio, depending on the size of the engine or the power it can handle.

The layers or sheets of graphene or graphene oxide can be supported by other highly porous sheets, plates or strata.

The filter holes are 0.35 nm in diameter.

In cases where a rapid flow is desired with multi-layer filters, it is necessary to use booster or suction motorized pumps to apply a small differential pressure. Large chambers with large filters can also be used where the obtained oxygen is obtained or stored. The performance of this system is so high that it is useful even applying power from the network in the separation between O2 and N2.

To prevent clogging or particulates from attaching to the membranes, the airflow is periodically reversed, or a particulate pre-filter is added.

In the filtering of O2 from the air, He, H2, CO2, Ar and water vapor accompany it, all of them with a smaller kinetic diameter and in small quantities except Ar, which occupies 0.9% of the air, but since it is a noble gas it does not affect. Very cheap industrial O2 is obtained.

The kinetic diameter of the O2 molecule is smaller than that of N2. Despite the fact that oxygen has a higher number (8) and atomic weight (15.9994u) than nitrogen (7) and (14.007u) respectively.

The device can also be supplied with a kit, consisting of the membranes, valves and installation. That applies to engines already manufactured.

The simplest way would consist of applying a nanomolecular filter in parallel or in series with the air intake. It would partially increase the oxygen, but it might be enough until you get better results with the filters.

Hollow fiber membranes and clusters of nanotubes can also be used, in the last two cases the conduit orifice should be 3.5 Å. It is interesting that the applied pressure is low or that the motor suction is sufficient.

The membranes have a thickness between approximately 0.5 and 10,000 nm, and are formed by one or multiple layers of atoms, to which multiple pores or perforations are made. They can be obtained by electrolytic deposition, by means of an electric current the metal is deposited. By chemical deposition, a chemical reaction causes the metal to be reduced and deposited, by deposition by vacuum plating. Pinholes can be performed using continuous or ultra-short flash lasers.

Oxygen can be applied in four ways:
a) Using exclusively cylinders with high pressure industrial oxygen or liquid oxygen (the gas could be mixed with argon).
b) Using the O2 obtained through nanoparticle filters plus the pressure of a compressor or motor suction,
c) Using the O2 bottles supplemented with the filtering with nanoparticles.
d) In current engines, O2 can be mixed with a proportion of the air used that acts as an attenuator or diluter.

The bottles can be recharged with oxygen, hydrogen and argon obtained from renewable energy, which are currently difficult to store. It would be a very useful and cheap way to store renewable energy.

Using alcohol as fuel only CO2 and water vapor are produced. With H2 only water vapor is produced as waste elements.

In some cases, when renewable energies are not used, it can be somewhat more expensive, however, even in that case, which is the worst, it is very beneficial both by increasing engine power and by benefiting health, the environment and climate change. Therefore, its use could become mandatory.

In land vehicles, cars, trains, etc. allows the loading or replacement of bottles or refilling of O2 at stops. On boats, filtration is preferable.

Gasoline is combined with oxygen in a ratio of approximately 1/3 by weight, kerosene 1/2.5, and ethanol 1/2.

Example: For a car that consumes 6 liters/h per 100 km. (5 kg of gasoline) would have to carry 15 kg of liquid O2 at 200-300 bars, plus the containers. Whose weight gain is not problematic. Neither is the cost, since industrial oxygen is very cheap. For 500 km. that same car should have 75 O2. BUT IT IS NOT NECESSARY TO CARRY THIS BOTTLED AMOUNT, SINCE MORE O2 CAN BE GENERATED DURING THE ROUTE.

In airplanes, when using compressed oxygen, it is not necessary to compress the air, it can reach high altitudes and speeds, for which reason the resistance to advance is very small and the consumption of fuel and oxygen is very low. It would rise vertically with electric motors and fans and in the stratosphere it would fly with strato-jets.

O2 can be produced simultaneously, allowing fewer bottles to be carried.

Electric motors are powered by batteries and fuel cells.

### BRIEF DESCRIPTION OF THE DRAWINGS

Figure 1 shows a schematic view of an ordered group of air component elements involved in filtering.
Figure 2 shows a schematic view of a membrane formed by two layers of atoms in which perforations have been made for filtering.
Figure 3 shows a schematic, perspective and sectional view of a portion of hollow fiber for filtering the air.
Figure 4 shows a schematic and sectional view of a hollow fiber portion for air filtering.
Figure 5 shows a schematic, perspective and partially sectioned view of a hollow fiber membrane module for air filtering.
Figure 6 shows a schematic, partial and perspective view of a portion of the membrane formed by several nanotubes attached laterally to each other.
Figure 7 shows a schematic view similar to that of figure two, but with a greater description of the elements.
Figure 8 shows a schematic and partial view of a portion of the graphene layer showing the atoms.
Figure 9 shows a schematic view of a compressor applying air to a nanoparticle filter, a nitrogen-oxygen separator, among other elements.
Figure 10 shows a schematic view of a diagram of a possible mode of application of the oxygen installation.
Figures 11 and 12 show schematic and perspective views of spiral membrane filters.
Figure 13 shows a schematic, partial and partially sectioned view of a parallelepiped filter.
Figure 14 shows a schematic view of a non-moving motor, for example, from a factory.
Figures 15 to 19 show schematic views in plan and partially sectioned of vehicles with variants of the system of the invention.
Figures 20 to 24 show views of modes of operation.
Figures 25 to 28 show views of various operating diagrams.
Figure 29 shows a schematic and sectional view of a hydrogen bottle.
Figure 30 shows a schematic and sectional view of a liquid oxygen cylinder.
Figure 31 shows a vehicle with the refueling systems using bottles and oxygen, hydrogen and other fuels, both gaseous and liquid, of the system of the invention.
Figure 32 shows a schematic and elevation view of a vehicle with the trailer of the invention.

### DETAILED DESCRIPTION OF AN EMBODIMENT OF THE INVENTION

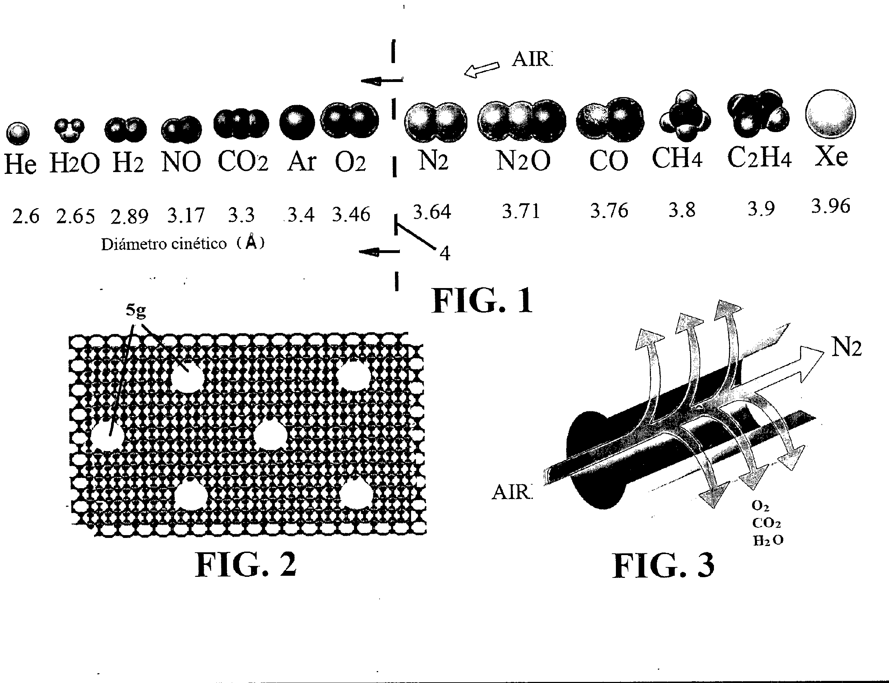

Figure 1 shows a series of elements, air components, separated by a nanomolecular filter (4) with multiple nanopores of 3.5Å or less, approximately, ordered according to their kinetic diameter: On the right, in addition to the applied atmospheric air, the non-filtered elements N2, N2O, CO, CH2, C2H4 and Xe are shown, whose kinetic diameters are respectively (3.64Å, 3.71Å, 3.76Å, 3.8Å, 3.9Å and 3.96Å), all of them greater than the diameter of the filter nanopores. To the left of the nanofilter are separated and stored the filtered elements O2, Ar, C, O2, NO, H2, H2O and He whose kinetic diameters are respectively (3.46Å, 3.4Å, 3.3Å, 3.17Å, 3.89Å, 2.65Å and 2.6 Å), all of them smaller than the diameter of the filter nanopores. For the engine, the important thing in this group is oxygen, since the rest before combustion intervene in negligible quantities or are inert.

Figure 2 shows a portion of the membrane or filtering sieve formed by two layers of atoms and to which the pores (5g) have been made by means of laser beams. More than two layers of atoms can be used.

Figure 3 shows a portion of hollow fiber. Entering the air at one end and leaving the O2, CO2 and H2O laterally and radially. Crossing the membrane and leaving the N2 at the other end, of larger dimensions, which cannot cross the membrane.

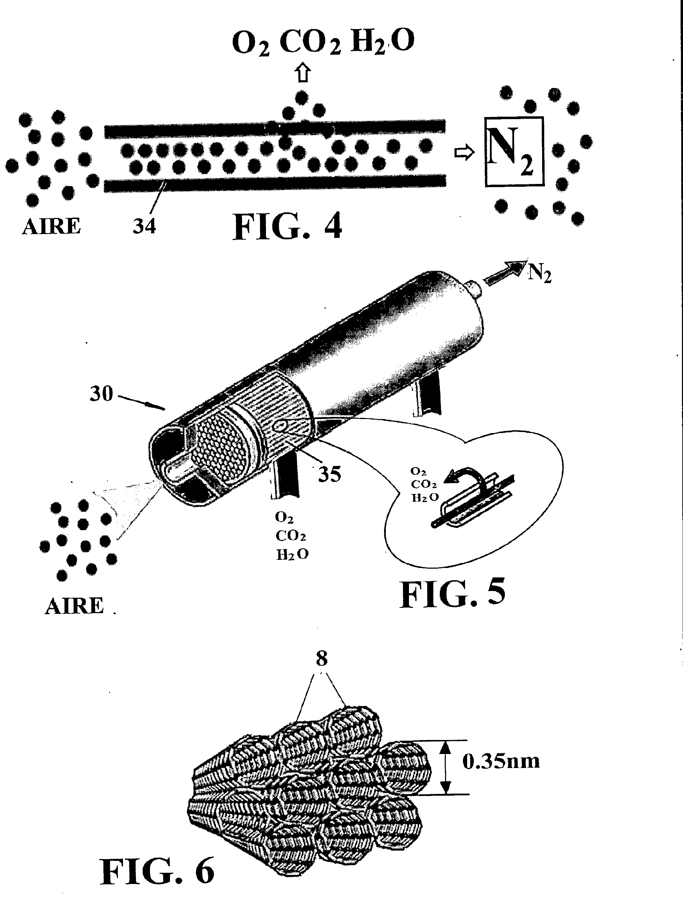

Figure 4 shows a portion of the hollow fiber membrane (34). Similar to figure 3 but showing the intervening elements. Entering the air at one end and leaving the O2, CO2 and H2O laterally and radially, crossing the membrane and leaving the N2 at the other end, of larger dimensions, which cannot pass through the membrane.

Figure 5 shows a hollow fiber membrane module (30). Air entering at one end and O2, CO2 and H2O exiting laterally and radially, crossing the group of membranes (35) and N2 exiting at the other end, which cannot pass through the membrane due to its larger dimensions.

Figure 6 shows a portion of the filtering membrane or sieve formed by the nanotubes (8) attached laterally to each other. In this case, the internal diameter of the nanotubes is 0.35 nm through which the filtering is carried out, allowing the passage of O2.

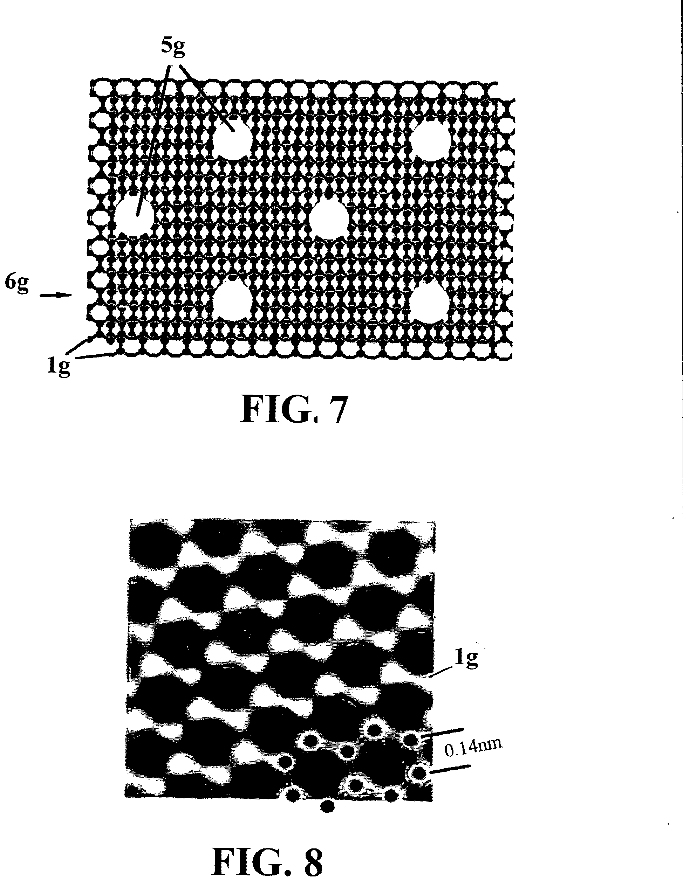

Figure 7 shows a portion of the filtering membrane or sieve (6g) formed by two layers of atoms (1g) and to which the pores (5g) have been made by means of laser beams. More than two layers of atoms can be used.

Figure 8 shows the microscope view of a portion of a sheet or layer of graphene whose atoms form a network with cells or hexagonal grids, with the atoms at 0.14 nm each from its neighbor, therefore the internal gap of said cells is between 0.20 and 0.25nm, (or its equivalent: between 2Å to 2.5Å) that is, less than the kinetic diameter of He. For this reason, the nanopores must be made larger, which allow the passage of O2.

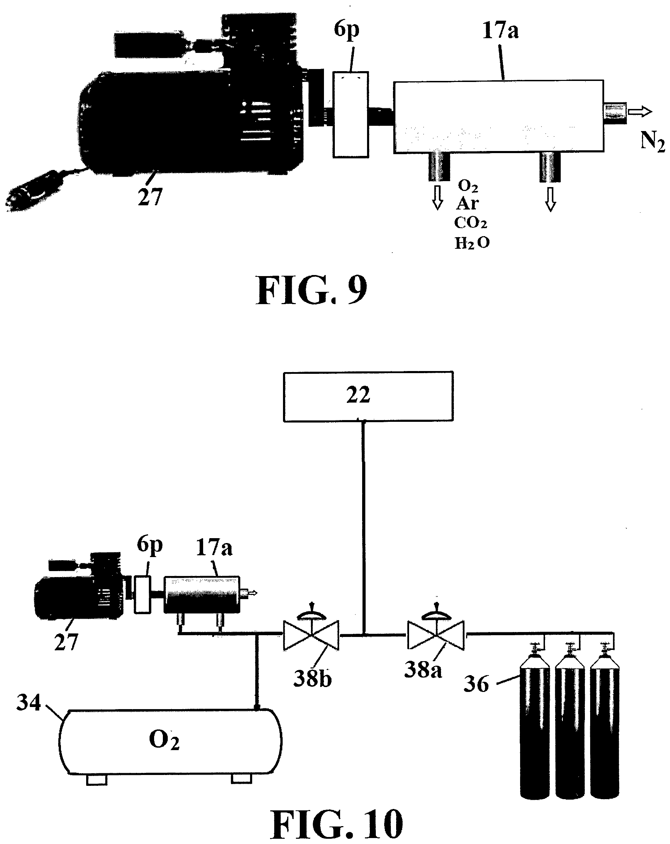

Figure 9 shows the electrically powered compressor (27e), which drives the air through a particulate filter (6p) to the hollow fiber module (17a). Mainly separating nitrogen from oxygen, in addition to other less important elements mixed with O2, argon, CO2 and water vapor come out. Nitrogen can be used for industrial uses or it can be released abroad. The particle filter (6p) can be placed at the compressor inlet.

Figure 10 shows an installation with a compressor (27) which drives the air through a particle filter (6p) to the hollow fiber module (17a). which separates the oxygen and through the ducts (35) joins that of the bottles (36) to send it to the storage chamber (34) and at the same time it is supplied to the engine intake system (22) through the regulating and passage valve (38) controlled by a microprocessor (37) or similar system. Any other type of nanomolecular filter can be used. The (6p) particle filter can be placed at the compressor inlet. The bottles can be oxygen alone or mixed with argon.

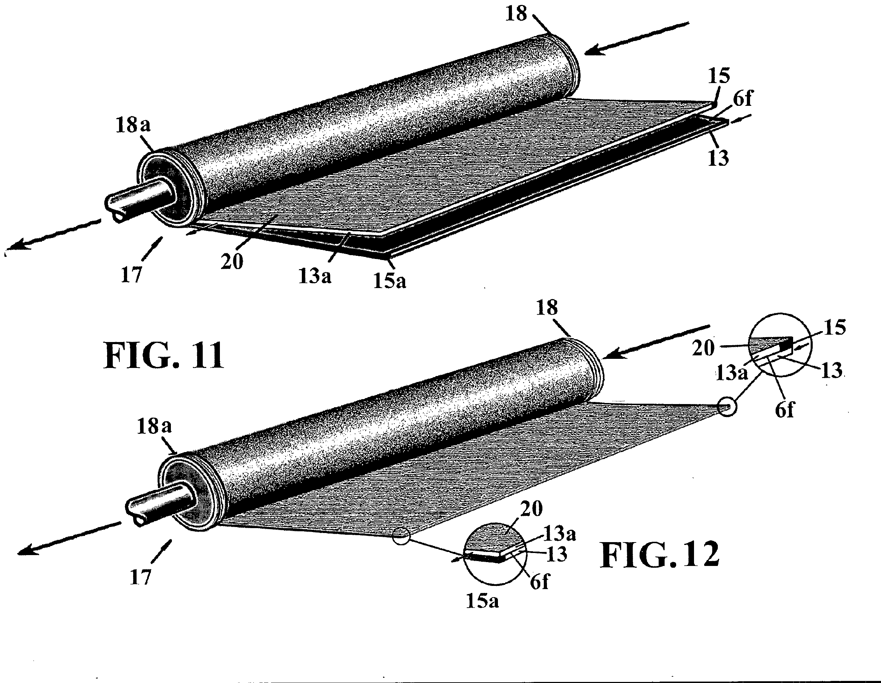

Figure 11 shows a cylindrical cartridge (17) consisting of a cylindrical cover, not shown in the figure, inside which a spiral membrane is placed, which is shown unfolded, and is formed by two separate separator or spacer sheets. The sheet (13) with large pores, woven or made of fibers, preferably larger than those arranged parallel to the axis of the filter, carries the nanomolecular filter layer (6f) on one side. The sheet (13a) carries its outermost face with a waterproof film (20). The air, after passing through a quick-release particulate pre-filter and not shown in the figure, passes through the disc (18) with large pores or made of fibers or fabric and enters through the adjacent end of the sheet (13) of fabric or made of fibers with large pores, preferably arranged parallel to the axis of the filter, and from this, since it cannot exit through the clogged end (15a), oxygen passes through the filter (6f) to the separating and porous sheet (13a) , which having its end (15) clogged, does so at the opposite end, through the disc (18a) with large pores or made of fibers or fabric, leaving the filter as shown by the left arrow. The sheets (13) have their ends sealed with waterproof tapes, cords or adhesives (15 and 15a). The nitrogen with the waste elements is sucked or pushed to the outside through a conduit not shown in the figure.

Figure 12 shows a cylindrical cartridge (17) consisting of a cylindrical cover, not shown in the figure, inside which a one-piece spiral membrane is placed, which is shown unfolded, formed by two separator or spacer sheets attached and between them. the nanomolecular filter layer (6f). The sheet (13a) carries its outermost face with a waterproof film (20). After passing through a particulate pre-filter not shown in the figure, the air passes through the disc (18) with large pores, woven or made of fibers, and enters through the adjacent end of the sheet (13) and from this, by not being able to exit through (15a) blocked, the oxygen passes through the filter (6f) to the separating and porous sheet (13a), which, having its end (15) obstructed, exits through the opposite end, through the disc (18a). ) of large pores or tissue, leaving the filter as shown by the arrow with larger dimensions. The ends of the sheets (13) are sealed with waterproof tapes, cords or adhesives (15 and 15a). The nitrogen with the waste elements is sucked or pushed to the outside through a conduit not shown in the figure.

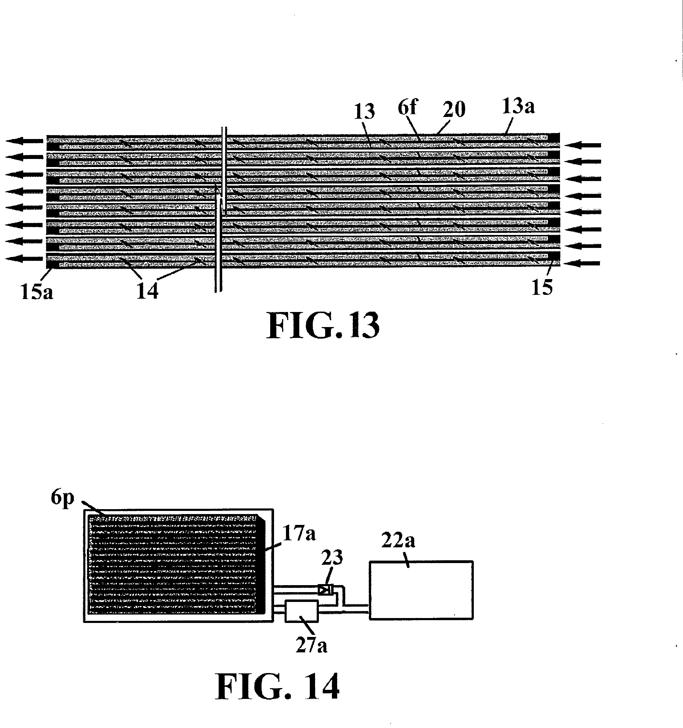

Figure 13 shows the parallelepiped nanofilter whose membrane consists of multiple alternated flat porous sheets (13 and 13a). The air, after passing a particle pre-filter, enters the parallelepiped filter through a porous coupling element, then passing through the side and inside half of the porous sheets (13) and is forced, because its other parts are lateral ends (15a) sealed, to allow oxygen to pass into the other half of alternate sheets (13a) after passing through, arrows (14), the intermediate nanofilter layers (6f), exiting through the sides of these second sheets together with the outlet of the parallelepiped filter, as the other lateral ends (15) are obstructed, leaving the parallelepiped filter after passing through another porous coupling element. The sheets (13a) carry their outermost face of each pair of sheets, with a waterproof film (20). This view is valid for the membranes of spiral cylindrical filters. The large surface area of the systems in figures 11, 12 and 13 allow a higher O2 / N2 separation rate.

Figure 14 shows the non-displacement or stationary engine (22a) that receives the oxygen or oxygen-air mixture after passing through a large filter set consisting of a suspended particulate pre-filter (6p) and subsequently a nanomolecular filter (17a). ). Oxygen can be sucked into the engine through the check valve (23), or it can be sucked in and driven by the compressor or motor pump (27a). The motorized pump can be placed before the filters, sucking the air from outside and propelling it through said filters, which in this case would be in a hermetic chamber. The pumps can be powered by renewable energy. The non-return valve can be eliminated by placing a selector valve at the confluence of the suction conduit with that coming from the compressor or motor pump (27a) that selects the oxygen sucked by the engine or the one driven by the motor pump.

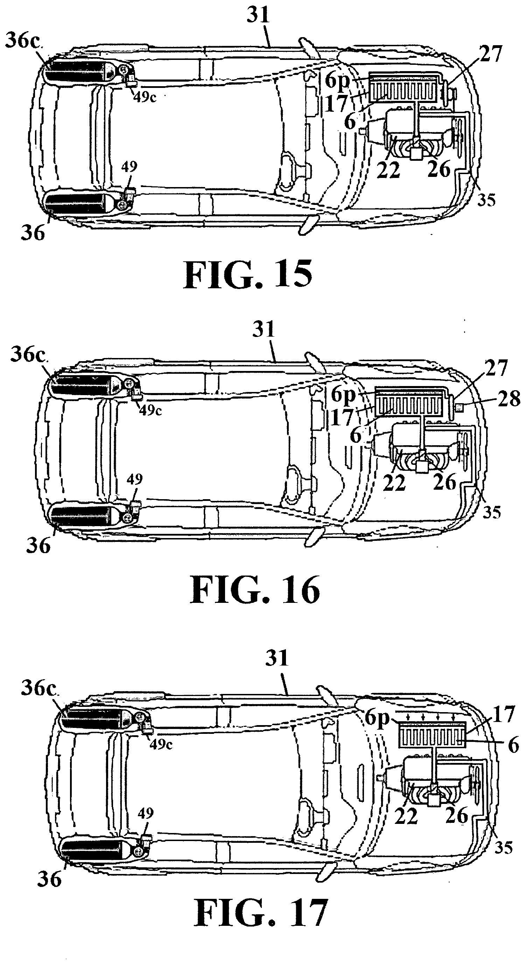

Figure 15 shows an embodiment of the invention on the vehicle (31), the engine (22). The oxygen is sent from the bottle (36) through the conduit (35). One or several bottles, placed in the lateral or rear areas. The air is propelled by the compressor (27) driven by the engine, through the suspended particle filter (6p), and then the nanomolecular filter (17) with multiple membranes or multi-pore sheets (6) with a large surface area and the oxygen supply valve (26) to the engine. To facilitate admission and the amount of filtering, both filters, which may have a large surface area, can be placed in the middle or rear areas of the vehicle, where there is more space. The CO2 is stored in the bottle (36c) and is extracted through the coupling (49c). The O2 is charged by the coupling (49).

Figure 16 shows an embodiment of the invention on the vehicle (31), the engine (22). The oxygen is sent from the bottle (36) through the conduit (35). The air is driven by the compressor (27) driven by the electric motor (28), through the suspended particle filter (6p), and then by the nanomolecular filter (17) with multiple membranes or sheets (6) with multiple pores. with a large surface area and the valve (26) for the oxygen supply to the engine. To facilitate the admission and the amount of filtering, both filters, which can be large, are placed in the middle or rear areas of the vehicle, where there is more space. It can be considered an adapted engine. The CO2 is stored in the bottle (36c) and is extracted through the coupling (49c). O2 is charged through the connector or coupling (49).

Figure 17 shows the vehicle (31) and the engine (22), the suspended particle filter (6p), the nanomolecular filter (17) with multiple membranes or sheets (6) with multiple large-surface pores, the valve ( 26) oxygen supply to the engine. The motor is powered by suction. To facilitate the admission and the amount of filtering of both filters and that they can be large, they are even placed in the middle or rear areas of the vehicle. It can be considered as an adapted engine. Oxygen is also sent from the bottle (36) through the conduit (35). The CO2 is stored in the bottle (36c) and is extracted through the coupling (49c). The O2 is charged through the connector or coupling (49) through a hose.

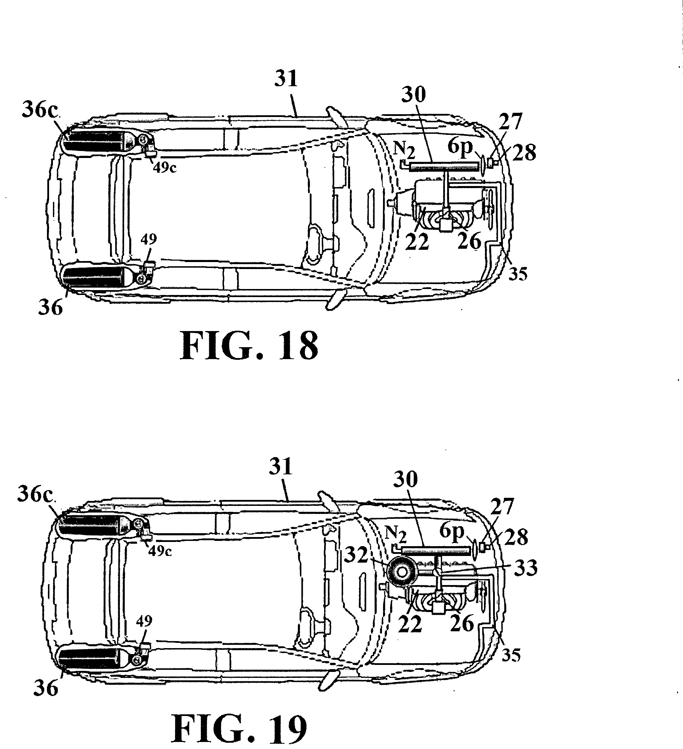

Figure 18 shows the vehicle (31) and the engine (22). The air is driven by the compressor (27) driven by the electric motor (28), through the suspended particle filter (6p), and then through the hollow fiber membrane module (30). Next, the oxygen flow is regulated by valve (26). The nitrogen (N2) that is produced can be stored or sent abroad. The motor can be powered by suction. It can be considered as an adapted engine. Oxygen is also sent from the bottle (36) through the conduit (35). The CO2 is stored in the bottle (36c) and is extracted through the coupling (49c). O2 is charged through the connector or coupling (49).

Figure 19 shows the vehicle (31) and the engine (22). Part of the air is driven by the compressor (27) driven by the electric motor (28), through the suspended particle filter (6p), and then through the hollow fiber membrane module (30) oxygen is obtained . The obtained oxygen is variably mixed with the air that enters through the current filter (32) through the mixing valve (33). Next, the mixture of air and oxygen is regulated by means of the valve (26). The nitrogen (N2) that is produced can be stored or sent abroad. The motor can be powered by suction. It can be considered as an adapted engine. Oxygen is also sent from the bottle (36) through the conduit (35). The CO2 is stored in the bottle (36c) and is extracted through the coupling (49c). The O2 is charged through the connector (49).

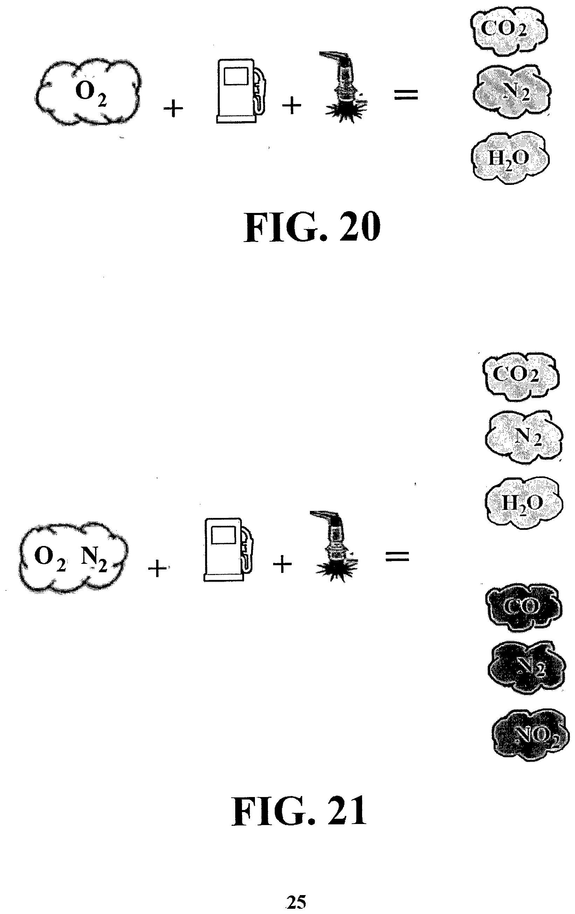

Figure 20 shows a complete combustion of a hydrocarbon with oxygen when a spark is applied, resulting in CO2, N2 and H2O. Which are not toxic and in the case of hydrogen CO2 is not produced either. F

igure 21 shows incomplete combustion of a hydrocarbon with oxygen when a spark is applied, resulting in non-toxic CO2, N2 and H2O, and highly toxic CO, HC and NO2.

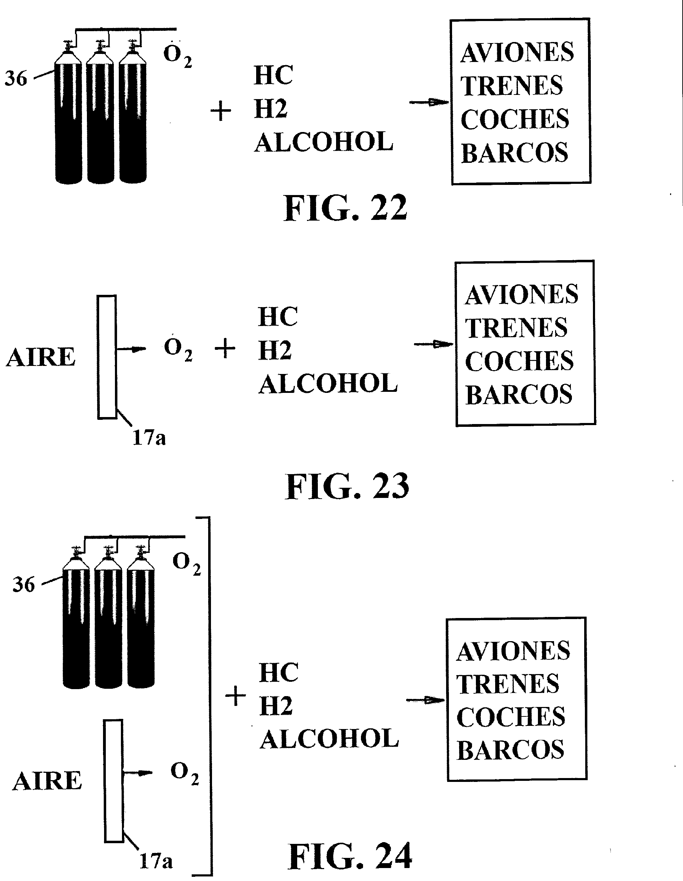

Figure 22 shows the use of oxygen (O2) from the bottles (36) as an oxidizer that with a hydrocarbon (HC), hydrogen (H2) or alcohol is used in Aircraft, Train, Car and Ship engines.

Figure 23 shows the use of oxygen (O2) obtained by filtering the air through the filter (17a), ¬as an oxidizer that with a hydrocarbon (HC), hydrogen (H2) or alcohol is used in engines of Aircraft, Trains, Cars and Boats.

Figure 24 shows the use of O2 from the bottles (36) and that obtained by filtering the air through the filter (17a) ¬as an oxidizer that with a hydrocarbon (HC), hydrogen (H2) or alcohol is used in Airplanes, Trains, Cars and Boats.

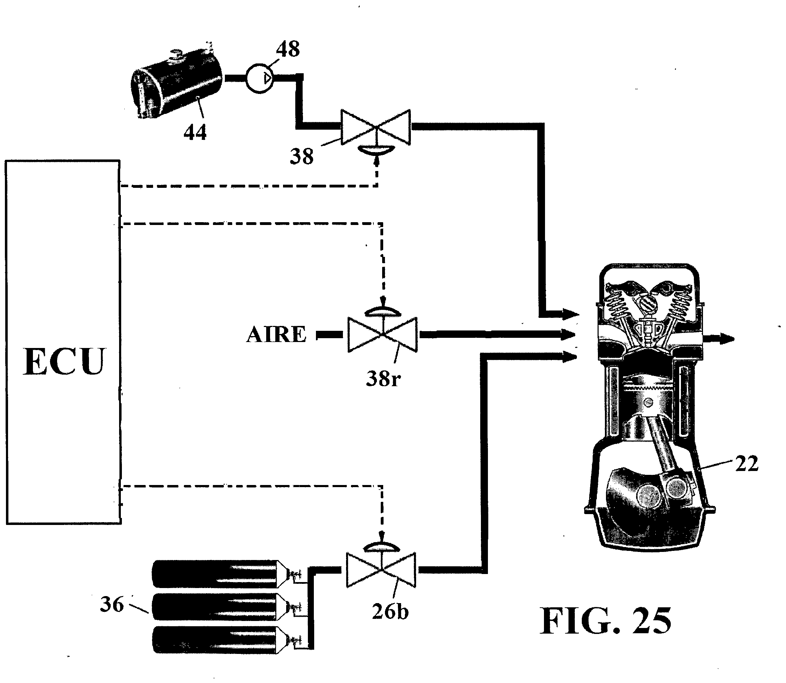

Figure 25 shows the pump (48) that sends the fuel from the tank (44) to the engine (22). Controlled by the ECU and throttle (38). Which also controls the regulating valve (26b) from the O2 bottles to the engine (22). The optionally used valve (38r) controls the air rate.

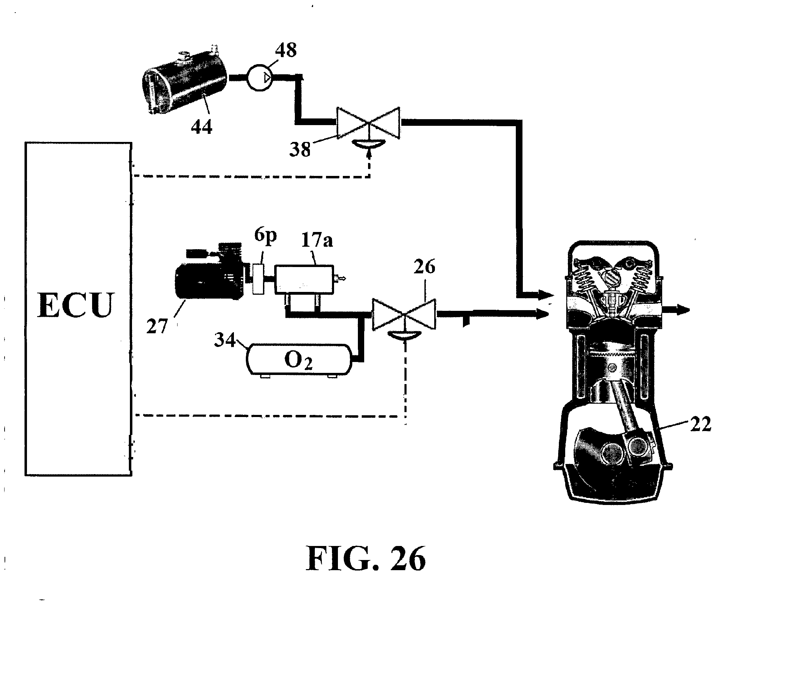

Figure 26 shows the pump (48) that sends the fuel from the tank (44) to the engine (22). Controlled by the ECU and throttle (38). Also through the regulating valve (26) it controls the O2 obtained by filtering the air with the compressor (27), the particle filter (6p), the nanomolecular filter (17a) and the O2 coming from the tank (34) to the engine (22)..

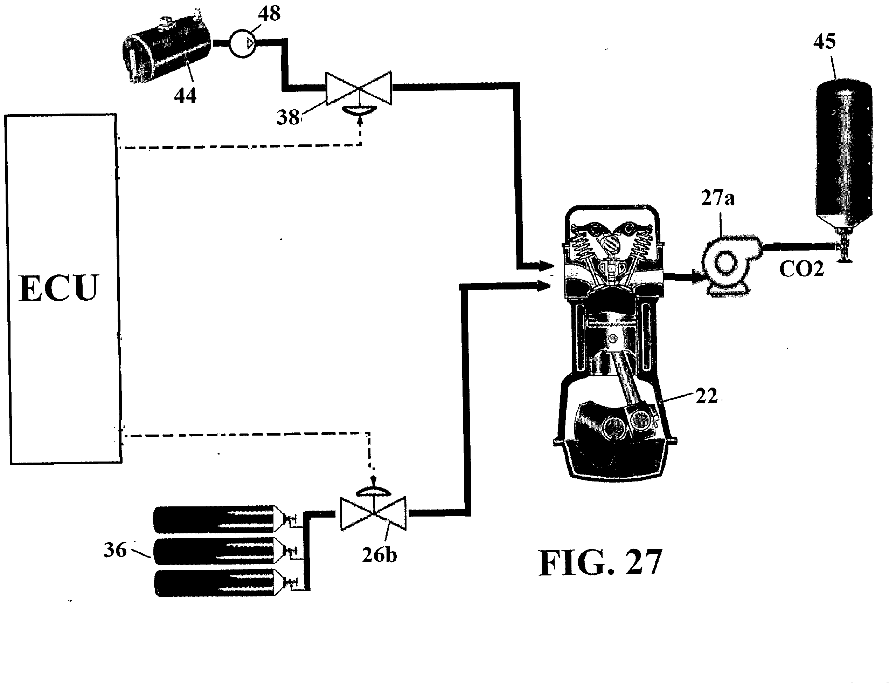

Figure 27 shows the pump (48) that sends the fuel from the tank (44) to the engine (22). Controlled by ECU and throttle (38). Which also controls with the regulating valve (26b) the O2 from the O2 bottles to the engine (22). If air is not used, the exhaust gases only carry CO2, which is compressed by the compressor (27a) and stored in the tank (45).

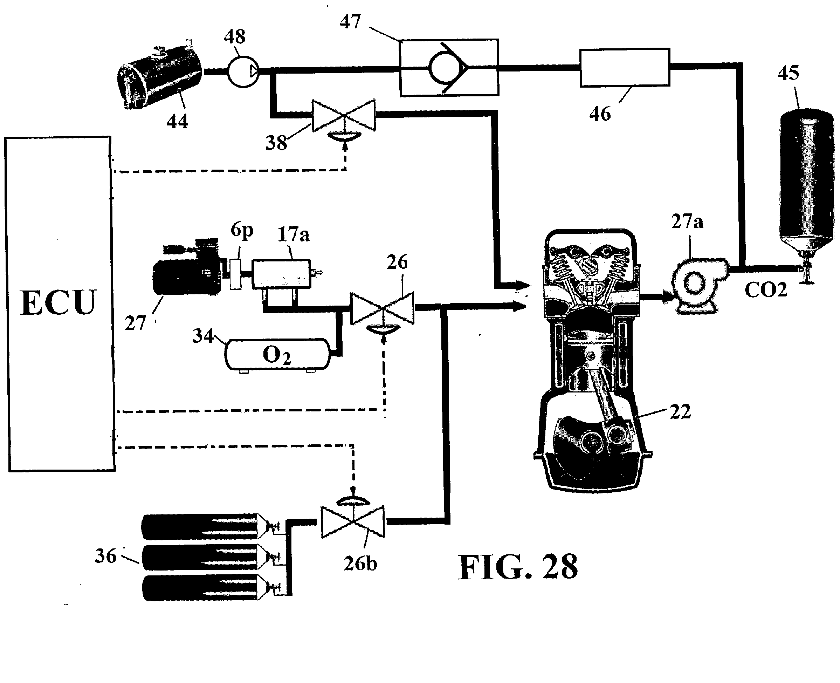

Figure 28 shows the pump (48) that sends the fuel from the tank (44) to the engine (22). Controlled by the ECU and throttle (38). It also controls with the regulating valve (26b) the O2 from the bottles (36) to the motor (22) and controls with the valve (26) the O2 obtained by filtering the air by the compressor (27), particulate filter (6p) , nanomolecular filter (17a) and the one coming from the tank (34) to the motor (22). If air is not used, the exhaust gases are only CO2, which is compressed by the compressor (27a) and stored in the tank (45) or transformed into fuel mixed with water at high pressure and temperature in the chamber (46). through renewable energies, feeding back through the check valve (47) to the fuel circuit.

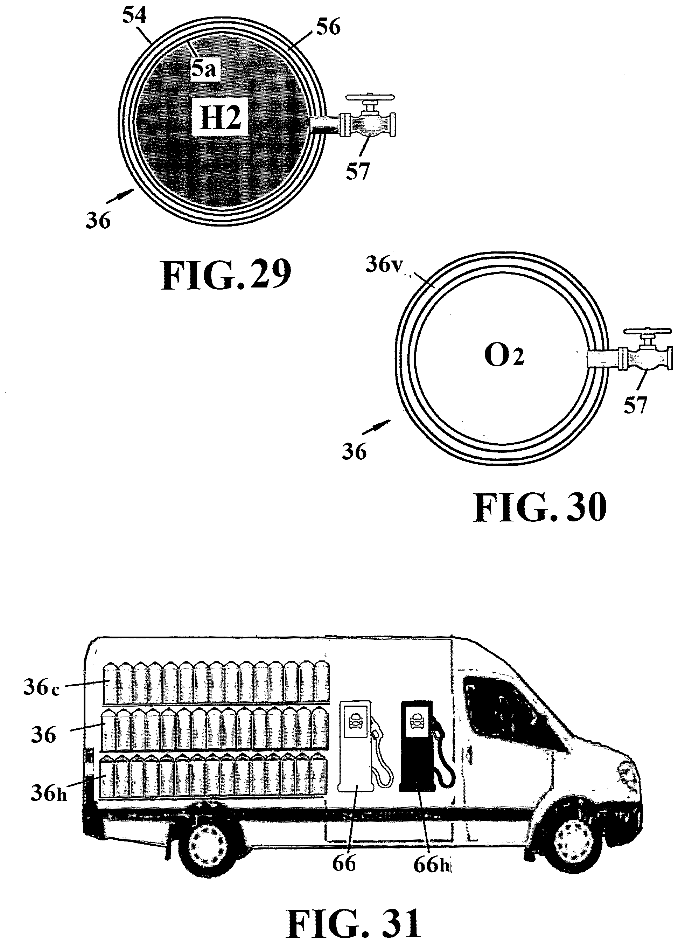

Figure 29 shows a bottle (36) which has a chamber (56) between the outer cover (54) and the inner cover (5a), with a fluid at a higher pressure than the internal H2. The H2 outlet is initially controlled by the manual valve (57). In a variant, three covers or casings can be used, the innermost made of a polymer with very little permeability and the outermost protective against flames.

Figure 30 shows a bottle (36) of liquid oxygen which has an intermediate chamber (36v) in which a vacuum is made. The O2 outlet is initially controlled by the manual valve (57). This system can be applied to other liquefied gases.

Figure 31 shows a truck or van which carries, among other things, hydrogen bottles (36h), oxygen (36) and discharged CO2 bottles (36c). It also carries two oxygen pumps (66), hydrogen (66h) and the possibility of extracting CO2 with hoses. In all cases, all these elements are suitably conditioned and protected.

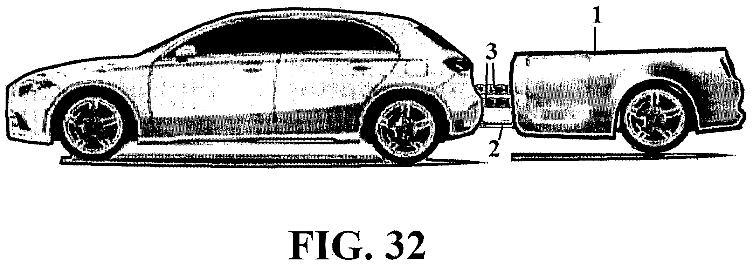

Figure 32 shows an embodiment of the invention, consisting of the trailer (1), the element or articulated support bar (2) and the corrugated plastic covers (3) that surround the fuel transmission ducts and/or or oxidizers. Used valves can be replaced by solenoid valves. This system of bottles and refills with hoses is also valid for gasoline, natural gas and other fuels used in service stations. But it is preferably reserved for low-use fuels. Alcohol and hydrogen use a facility not shown in the figures. Some valves and sensors are also not shown to facilitate the interpretation of the plates. Stoichiometric ratio or combustion, ideal ratio (air/fuel, by weight), most efficient. Lambda λ factor: Gasoline engine: 14.7, diesel: 14.5 and ethanol: 6.7. The lambda probe is in charge of measuring and controlling that the mixture that reaches the cylinder for combustion is adequate for the fuel used. The ECU receives information from the engine: rpm, intake flow, cooling temperature and throttle valve position. A rich mixture increases fuel consumption, hydrocarbon (HC) and carbon monoxide (CO) emissions, reduces power, increases carbon deposits, fouls spark plugs, and dilutes engine lubricating oil. Lean mixture, using more air than necessary, higher fuel temperature, reduces power, raises engine temperature and increases (NOx) - causes pre-ignition - violent combustion and serious engine damage. Other types of O2 filtering can be applied, as well as CO2 treatment to obtain fuels, existing or to be designed. Bottles can be exchanged at stops or O2 can be injected and CO2 extracted via hoses at service stations.

## Claims

1. Oxygen and fuel supply system for internal combustion engines, comprising oxygen and fuel suppliers for the engines, particle filters, oxygen generators through nanofilters, pressurized oxygen bottles and air compressors, **characterized in that** It comprises:
- Some means of loading O2, or O2 mixed with Ar, by means of bottles, carboys or interchangeable tanks;
- Some means of recharging the O2, or O2 mixed with Ar, by means of hoses; - Filter media by means of particle pre-filters;
- Complementary means of nanomolecular membrane filters that separate O2 from the air, performing the separation by means of the aspiration or suction of the combustion engine or the suction or impulsion of a pump or compressor driven by an electric motor or mechanically by the combustion engine itself. ;
- Storage means for the O2 separated or obtained;
- Means for controlling the variable fuel/O2 mixture by means of a processor or an ECU (engine control unit) engine control unit;
- Means for controlling the variable air/O2 mixture by means of a processor or an ECU (engine control unit) engine control unit;
- Means for compression and storage of CO2 from exhaust gases;
- Means for discharging the CO2,
- Means for refeeding the CO2 mixed with the engine fuel, once it has been treated and converted into fuel;
- Variable fuel control means: synthetic fuel, hydrocarbons, alcohols or hydrogen, - Some trailers transported by the vehicles with a bar or joint that carry the fuels and oxidizers are connected with pipes and
- Some distributor vehicles located in strategic places on land routes, loaded with oxygen, hydrogen and optionally biological or synthetic fuels, in bottles or canisters and some suppliers or dispensers of said elements in the form of pressurized or liquefied gas through hoses, adding fluid application facilities to the vehicles in the engines.

2. The system of claim 1, **characterized in that** the oxygen cylinders supply the total or partial comburent supply to the engine.

3. The system of claim 1, **characterized in that** the filters are hollow fiber membranes, O2 separators and nitrogen eliminators.

4. The system of claim 1, **characterized in that** the filters consist of hollow fiber membrane modules whose walls have 3.5 Å pores.

5. The system of claim 1, **characterized in that** the filters are made of groups of laterally attached nanotubes whose internal diameter is 3.5 Å.

6. The system of claim 1, **characterized in that** the membranes consist of a layer of graphene or graphene oxide.

7. The system of claim 1, **characterized in that** the membranes have a thickness between 0.5 and 10,000 nm, and are formed by one or multiple layers of atoms, to which multiple pores or perforations are made.

8. The system of claim 6, **characterized in that** the membranes are obtained by electrolytic deposition, with an electric current the metal is deposited.

9. The system of claim 6, **characterized in that** the membranes are obtained by chemical deposition, a chemical reaction reduces the metal and it is deposited.

10. The system of claim 6, **characterized in that** the membranes are obtained by vacuum metal plating.

11. The system of claim 6, **characterized in that** the membranes are obtained by electrospray.

12. The system of claim 6, **characterized in that** the membranes are perforated by applying UV light with a wavelength of 185 nm and 254 nm.

13. The system of claim 1, 6, **characterized in that** the membranes are perforated by applying a continuous laser beam or ultra-short flashes.

14. The system of claim 6, because perforations or pores are made to the membranes that have 0.35 nm.

15. The system of claim 1, **characterized in that** the membranes are made up of multiple nanotubes attached laterally to each other, in the same plane.

16. The system of claim 1, **characterized in that** the layers of atoms of the membranes are supported attached to a layer of high permeability substrate.

17. The system of claim 1, **characterized in that** the filters consist of cylindrical cartridges made up of a cylindrical cover inside which there is a spiral membrane formed by two sheets, with large pores or slits, made of fabric or fibers, carrying a sheet the nanomolecular filter layer (6f), on the other sheet (13a) carries an impermeable film (20) on its outermost face, has a disc (18) with large pores or slits or made of fibers or fabric and a sheet (13) with large pores or slits, with an obstructed end (15a).

18. The system of claim 1, **characterized in that** the filters consist of parallelepiped elements formed by multiple membranes arranged in flat or spiral layers, alternated with other separators.

19. The system of claim 1, **characterized in that** a compressor (27) drives the air through a particle filter (6p) to a hollow fiber module (17a). which separates the oxygen and through some ducts (35) joins that of a storage chamber (34) and at the same time is supplied to the engine intake system (22) through a regulating and passage valve (26 ) controlled by a processor, microprocessor or the ECU.

20. The system of claim 1, **characterized in that** the air is passed through the filters with compressors driven by the motor or with electric motors.

21. The system of claim 1, **characterized in that** the air is passed through the filters using compressors powered by renewable energy.

22. The system of claim 1, **characterized in that**, especially in airplanes and trains, electric motors powered by fuel cells and batteries are additionally used.

23. The system of claim 1, **characterized in that** the air flow is controlled by a mixing or regulating valve.

24. The system of claim 1, **characterized in that** the applied or obtained oxygen is mixed with air from the engine by means of a mixing or regulating valve.

25. The system of claim 1, **characterized in that** regulating valves control the air/O2 mixture in fixed or variable proportions by means of a processor, microprocessor or the ECU.

26. The system of claim 1, **characterized in that** the engine receives oxygen, or a mixture of oxygen and argon, from oxygen bottles controlled by a regulating valve (36b) and the ECU or a microprocessor.

27. The system of claim 1, **characterized in that** the fuel coming from the tank (44) is driven by a fuel pump (48), and controlled by the ECU or a microprocessor

28. The system of claim 1, **characterized in that** oxygen and argon are obtained and recharged in bottles using renewable energy or from the grid.

29. The system of claim 1, **characterized in that** when the engine is installed in an enclosure, such as a factory or the like, the nitrogen produced is stored pressurized in bottles.

30. The system of claim 1, **characterized in that** the ECU or the microprocessor receives operating signals from the engine and, depending on the regime and type of exhaust gases, reduces or increases the fuel and oxidizer, oxygen or air.

31. The system of claim 1, **characterized in that** in cars and trains the O2 is loaded and the CO2 is discharged with hoses using quick couplings.

32. The system of claim 1, **characterized in that** if the vehicles are airplanes they carry out vertical ascent and descent and in the stratosphere they use strato-reactors.

33. The system of claim 1, **characterized in that** the bottles have a chamber (56) between the external cover (54) and an internal one (5a), with a fluid at a higher pressure than the internal one of H2, and the outermost casing is protected against flames.

34. The system of claim 1, **characterized in that** the bottles carry a liquefied gas and have an intermediate chamber (36v) in which a vacuum is made.

35. The system of claim 1, **characterized in that** the bottles are interchangeable and the different fluid dispensers are carried in conditioned and protected vehicles.

36. The system of claim 1, **characterized in that** the vehicle facilities are made up of pipes and interconnected elements, exclusively adding interchangeable or refillable bottles or tanks, pressurized or liquid O2, as oxidizer, and synthetic or biological fuels, hydrocarbons, alcohols or hydrogen, as fuels.

37. The system of claim 1, **characterized in that** it consists of a trailer that is attached to the vehicle with a flexible or articulated mechanical joint, and an installation that communicates and supplies the fuels or oxidizers to the vehicle.

38. The system of claim 1, **characterized in that** the trailer is valid for land vehicles, cars, trucks and trains, and air vehicles such as planes and helicopters.

39. The system of claim 1, **characterized in that** when the fuel is hydrogen, the containers have a double casing, creating an intermediate chamber overpressurized with a noble gas or nitrogen at a higher pressure than hydrogen.

40. The system of claim 1, **characterized in that** the ducts of the fuel or oxidizer supply installation have a double wall and a detector system to warn of leaks.

41. The system of claim 1, **characterized in that** the ducts carry a resistant and corrugated plastic cover for protection.
